# EUROPÄISCHE PATENTANMELDUNG

(11) **EP 1 553 543 A1**
(43) Veröffentlichungstag der Anmeldung: **13.07.2005**
(21) Anmeldenummer: 05000265.8
(22) Anmeldetag: 07.01.2005
(51) Int. Cl.: G09B 27/04

(54) **Faltbare Karte**

(30) Priorität: 10.01.2004 DE 202004000262 U
(71) Anmelder: Nettsträter, Heinz, 59590 Geseke (DE)
(72) Erfinder: Nettsträter, Heinz, 59590 Geseke (DE)
(74) Vertreter: Fritz, Edmund Lothar, Dipl.-Chem.

(57) **Zusammenfassung**

Faltbare Karte (1), insbesondere Radwander-, Wander- oder Autostreckenkarte, umfassend einen Kartenbogen (2), der eine Leporello-Faltung mit einer Mehrzahl aufklappbarer Kartenfelder (20, 21) aufweist, wobei mindestens ein Teilausschnitt (6a, 6b) eines ersten Kartenfeldes (20) auf einem zweiten Kartenfeld (21) wiederholt angeordnet ist.

## Beschreibung

Die vorliegende Erfindung betrifft eine faltbare Karte, insbesondere Radwander-, Wander- oder Autostreckenkarte, umfassend einen Kartenbogen, der eine Leporello-Faltung mit einer Mehrzahl aufklappbarer Kartenfelder aufweist.

Faltbare Karten der eingangs genannten Art sind aus dem Stand der Technik bekannt. Diese haben allerdings den Nachteil, dass sie in der Regel zum Gebrauch vollständig entfaltet werden müssen. Insbesondere bei Radtouren und bei der Verwendung von Fahrradlenkertaschen, in deren Kartenfächern nur ein begrenzter Platz zur Verfügung steht, erweist sich der Gebrauch der herkömmlichen faltbaren Karte als schwierig, da die Karte aus der Fahrradlenkertasche herausgenommen und gegebenenfalls vollständig entfaltet werden muss, damit der Benutzer die gewünschten geographischen Informationen erhalten kann. Ferner ist es bei den bisher aus dem Stand der Technik bekannt gewordenen faltbaren Karten nicht möglich, längere Streckenverläufe, die sich beispielsweise aus einer nordöstlichen in eine südwestliche Richtung erstrecken, in kompakter Form darzustellen.

Hier setzt die vorliegende Erfindung an. Aufgabe der vorliegenden Erfindung ist es, eine faltbare Karte der eingangs genannten Art zur Verfügung zu stellen, die einfach zu handhaben ist und auf der weitestgehend beliebige Streckenverläufe und weitere geographische Informationen übersichtlich und in kompakter Form darstellbar sind.

Diese Aufgabe wird durch eine faltbare Karte der eingangs genannten Art mit den kennzeichnenden Merkmalen des Hauptanspruch gelöst. Erfindungsgemäß ist mindestens ein Teilausschnitt eines ersten Kartenfeldes auf einem zweiten Kartenfeld wiederholt angeordnet. Auf diese Weise wird quasi ein Überlapp des ersten Kartenfeldes mit dem zweiten Kartenfeld gebildet, auf dem sich die geographischen Informationen wiederholen. Der Benutzer der faltbaren Karte kann somit durch Umblättern des ersten Kartenfeldes und gegebenenfalls durch wiederholtes Weiterblättern zum zweiten Kartenfeld gelangen, auf dem der Teilausschnitt des ersten Kartenfeldes ein weiteres Mal angeordnet ist. Das zweite Kartenfeld weist weitere geographische Informationen (zum Beispiel den weiteren Streckenverlauf) auf, die - abgesehen von dem auf dem zweiten Kartenfeld wiederholt angeordneten Teilausschnitt des ersten Kartenfeldes - von den geographischen Informationen des ersten Kartenfeldes verschieden sind.

In einer bevorzugten Ausführungsform weist der Teilausschnitt eine Umrandung auf. Diese Umrandung erleichtert dem Benutzer der faltbaren Karte das Auffinden des Teilausschnitts auf dem jeweiligen Kartenfeld.

Vorzugsweise sind das erste Kartenfeld und das zweite Kartenfeld zueinander benachbart. Das bedeutet, dass der Benutzer durch einmaliges Umblättern vom ersten Kartenfeld zum zweiten Kartenfeld gelangt, auf dem der Teilausschnitt des ersten Kartenfeldes wiederholt dargestellt ist.

In einer besonders bevorzugten Ausführungsform ist ein Teilausschnitt, der mindestens abschnittsweise in einem unteren Abschnitt des ersten Kartenfeldes angeordnet ist, mindestens abschnittsweise in einem oberen Abschnitt des zweiten Kartenfeldes wiederholt angeordnet. Auf diese Weise lassen sich beispielsweise auch Streckenverläufe, die sich aus einer nordöstlichen in eine südwestliche Richtung erstrecken, in kompakter Form darstellen.

Um die Handhabung der faltbaren Karte weiter zu erleichtern, wird in einer besonders vorteilhaften Ausführungsform vorgeschlagen, dass jedes der Kartenfelder Nummerierungsmittel umfasst. Diese Nummerierungsmittel können insbesondere alphanumerische Zeichen umfassen, um dem Benutzer das Auffinden des gewünschten Kartenfeldes zu erleichtern.

In einer besonders bevorzugen Ausführungsform ist vorgesehen, dass der Teilausschnitt des ersten Kartenfeldes Verweisungsmittel aufweist, die auf die Nummerierungsmittel des zweiten Kartenfeldes verweisen. Diese Verweisungsmittel vereinfachen das Auffinden des zweiten Kartenfeldes, das dem ersten Kartenfeld zugeordnet ist und auf dem der Teilausschnitt des ersten Kartenfeldes ein weiteres Mal angeordnet ist.

Um die Schmutz- und Feuchtigkeitsbeständigkeit sowie die Verschleißfestigkeit der faltbaren Karte zu verbessern, wird in einer Weiterbildung vorgeschlagen, dass der Kartenbogen beidseitig eine wasserabweisende Beschichtung aufweist. Diese wasserabweisende Beschichtung sorgt dafür, dass der Kartenbogen bei einem Kontakt mit Wasser oder anderen Flüssigkeiten nicht aufweicht oder verschmutzt.

Vorzugsweise umfasst die wasserabweisende Beschichtung mindestens eine transparente Kunststofffolie.

Um die Herstellung der faltbaren Karte zu vereinfachen, wird in einer besonders vorteilhaften Ausführungsform vorgeschlagen, dass die Kunststofffolie auf den Kartenbogen kaschiert ist. Dadurch wird ein reißfester Verbund aus dem bedruckten Kartenbogen und den aufkaschierten transparenten Kunststofffolien zur Verfügung gestellt, der darüber hinaus auch weitgehend wasser- und schmutzresistent ist.

Die Kunststofffolie kann vorzugsweise Polypropylen, Polyethylen, Polyester, Polyethylenterephthalat (PET) oder auch Acetat aufweisen.

Damit die faltbare Karte hinreichend stabil ist, aber dennoch problemlos gefaltet werden kann, beträgt die Dicke der Kunststofffolien etwa 7 bis 25 µm, vorzugsweise 10 bis 20 µm, insbesondere 12 bis 15 µm.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen
- Fig. 1: eine perspektivische Ansicht einer faltbaren Karte gemäß einer bevorzugten Ausführungsform der vorliegenden Erfindung;
- Fig. 2: eine Draufsicht auf ein erstes aufgeklapptes Kartenblatt;
- Fig. 3: eine Draufsicht auf ein zweites aufgeklapptes Kartenblatt.

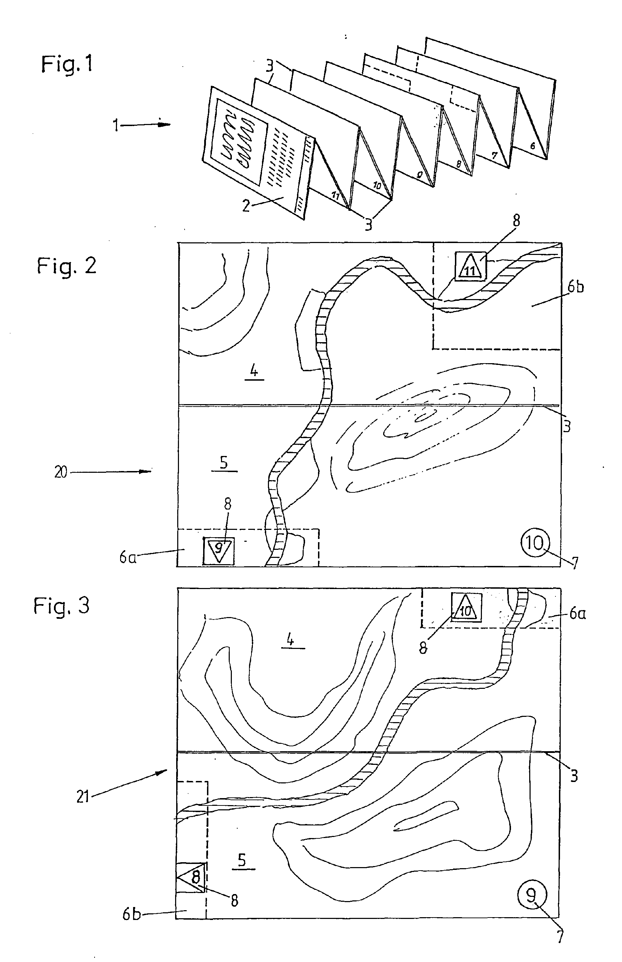

Zunächst wird auf Fig. 1 Bezug genommen. Darin ist eine faltbare Karte 1, die insbesondere eine Radwander-, Wander- oder Autostreckenkarte sein kann, perspektivisch dargestellt. Die faltbare Karte 1 weist einen bedruckten Kartenbogen 2 auf, der einem Benutzer unter anderem geographische Informationen zur Verfügung stellt. Der Kartenbogen 2 kann dabei einseitig oder auch beidseitig bedruckt sein und neben geographischen Informationen noch weitere Informationen enthalten.

Man erkennt, dass der Kartenbogen 2 entlang einer Mehrzahl von Faltbrüchen 3 in der Art und Weise gefaltet ist, dass die faltbare Karte 1 eine Leporello-Faltung mit einer Mehrzahl von Kartenfeldern aufweist. Um die Faltbarkeit der faltbaren Karte 1 zu gewährleisten besitzt das Papier, aus dem der Kartenbogen 2 besteht, vorzugsweise eine Grammatur zwischen 80 und 150 g/m² und insbesondere zwischen 110 und 120 g/m².

Die faltbare Karte 1 kann darüber hinaus eine wasser- und/oder schmutzabweisende Beschichtung aufweisen. Dabei können insbesondere auf beiden Seiten des Kartenbogens 2 transparente Kunststofffolien aufgebracht sein. Vorzugsweise werden die Kunststofffolien dabei auf den Kartenbogen aufkaschiert, so dass sich insgesamt ein wasser- und schmutzabweisender Verbund bildet, der darüber hinaus auch hinreichend reiß- und verschleißfest ist. Bei den Kunststofffolien, die zum Kaschieren des Kartenbogens 2 geeignet sind, kann es sich insbesondere um Polypropylen-Folien handeln, wobei auch orientiertes Polypropylen eingesetzt werden kann. Die Dicke der Kunststofffolien, die durch Kaschierung auf den Kartenbogen 2 aufgebracht werden, beträgt vorzugsweise etwa 10 bis 20 µm, insbesondere 12 bis 15 µm, um eine Faltung der faltbaren Karte 1 entlang der Faltbrüche 3 zu ermöglichen. Polypropylen-Kunststofffolien haben den Vorteil, dass sie eine hohe Abriebfestigkeit besitzen und weder giftig noch gesundheitsschädlich sind. Ferner enthält der für das Kaschieren benötigte Dispersionsklebstoff keine organischen Lösungsmittel. Prinzipiell können zur Kaschierung des Kartenbogens 2 auch Acetat-Kunststofffolien eingesetzt werden. Die Kunststofffolien können alternativ auch Polyethylen, Polyester oder Polyethylenterephthalat (PET) aufweisen. Die Kunststofffolien sind vorzugsweise beschreibbar.

Es hat sich gezeigt, dass eine faltbare Karte 1, die einen Kartenbogen 2 mit einer Grammatur zwischen 80g/m² und 120g/m², insbesondere mit einer Grammatur von 115g/m², aufweist, auf den Kunststofffolien mit einer Dicke von 10 bis 14 µm, insbesondere mit einer Dicke von 12 µm kaschiert sind, bei der Herstellung besonders einfach entlang der Faltbrüche 3 gefaltet werden kann. In dieser Ausführungsform ist eine Mehrfachfaltung der faltbaren Karte 1 besonders einfach möglich.

Die hier dargestellte faltbare Karte 1 mit Leporello-Faltung muss zum Gebrauch nicht immer vollständig entfaltet werden. Die Karte kann einfach entlang eines der Faltbrüche 3 aufgeklappt und wie ein Buch von Kartenfeld zu Kartenfeld um- und weitergeblättert werden.

Fig. 2 zeigt eine Draufsicht auf ein erstes Kartenfeld 20 des Kartenbogens 2 der faltbaren Karte 1 in einem aufgeklappten Verwendungszustand. Man erkennt, dass das erste Kartenfeld 20 entlang des in einem etwa mittigen Bereich verlaufenden Faltbruchs 3 aufgeklappt ist, welcher einen oberen Abschnitt 4 mit geographischen Informationen und einen unteren Abschnitt 5 mit geographischen Informationen begrenzt. Ferner weist das erste Kartenfeld 20 Nummerierungsmittel 7 auf, die geeignet sind, dem Benutzer der Karte 1 das Auffinden des ersten Kartenfeldes 20 zu erleichtern. Die Nummerierungsmittel 7 umfassen alphanumerische Zeichen und sind in diesem Ausführungsbeispiel im unteren Abschnitt 5 des ersten Kartenfeldes 20 angeordnet.

Man erkennt ferner, dass das erste Kartenfeld 20 zwei Teilausschnitte 6a, 6b mit geographischen Informationen aufweist, die jeweils eine gestrichelt ausgeführte seitliche Umrandung aufweisen. Der erste Teilausschnitt 6a ist dabei in einem Randbereich des unteren Abschnitts 5 und der zweite Teilausschnitt 6b in einem Randbereich des oberen Abschnitts 4 des ersten Kartenfeldes 20 angeordnet.

Im Bereich der Teilausschnitte 6a, 6b weist das erste Kartenfeld 20 Verweisungsmittel 8 auf, die auf die Nummerierungsmittel 7 weiterer Kartenfelder verweisen. Die Verweisungsmittel 8 erleichtern es dem Benutzer der faltbaren Karte 1, diejenigen Kartenfelder mit geographischen Informationen aufzufinden, die sich an das gerade benutzte erste Kartenfeld 20 anschließen.

Fig. 3 zeigt eine Draufsicht auf ein zweites Kartenfeld 21 der faltbaren Karte 1 in einem aufgeklappten Verwendungszustand. Man erkennt, dass das zweite Kartenfeld 21 ebenfalls entlang des Faltbruchs 3 aufgeklappt ist, welcher das zweite Kartenfeld 21 in einen oberen Abschnitt 4 und einen unteren Abschnitt 5 unterteilt. Das zweite Kartenfeld 21 weist wie was erste Kartenfeld 20 Nummerierungsmittel 7 sowie Verweisungsmittel 8 auf.

Im oberen Abschnitt 4 des zweiten Kartenfeldes 21 ist der erste Teilausschnitt 6a des ersten Kartenfeldes 20 wiederholt angeordnet. Die laterale Ausdehnung des erste Teilausschnitt 6a des zweiten Kartenfeldes 21 entspricht dabei derjenigen des ersten Teilausschnitts 6a des ersten Kartenfeldes 20. Das bedeutet also mit anderen Worten, dass der erste Teilausschnitt 6a des ersten Kartenfeldes 20 als erster Teilausschnitt 6a auf dem zweiten Kartenfeld 21 wiederholt angeordnet ist, so dass sich quasi ein Überlapp des ersten Kartenfeldes 20 mit dem zweiten Kartenfeld 21 bildet und somit die Verwendung der faltbaren Karte 1 vereinfacht wird. Das zweite Kartenfeld 21 weist weitere geographische Informationen auf, die - abgesehen von dem auf dem zweiten Kartenfeld 21 wiederholt dargestellten ersten Teilausschnitt 6a des ersten Kartenfeldes 20 - von den geographischen Informationen des ersten Kartenfeldes 20 verschieden sind und diese ergänzen.

Im unteren Abschnitt 5 weist das zweite Kartenfeld 21 seinerseits einen zweiten Teilausschnitt 6b auf, der auf einem dritten, hier nicht explizit dargestellten Kartenfeld wiederholt wird.

Mit der vorliegenden Erfindung wird eine faltbare Karte 1 zur Verfügung gestellt, die eine Leporello-Faltung mit einem Überlapp zwischen einzelnen Kartenfeldern aufweist, und die quasi wie ein Buch auf- und umgeblättert werden kann. Bei Verwendung der erfindungsgemäßen faltbaren Karte als Radwander-, Wander- oder Autostreckenkarte lässt sich die Karte 1 bequem in einem Kartenfach einer herkömmlichen Fahrradlenkertasche unterbringen.

Die faltbare Karte 1 erleichtert durch Verwendung der Nummerierungsmittel 7 und Verweisungsmittel 8 darüber hinaus auch den Gebrauch der faltbaren Karte 1. Ferner können beispielsweise auch geographische Informationen, die sich beispielsweise aus einer nordöstlichen in eine südwestliche Richtung erstrecken, in kompakter Form dargestellt werden.

## Patentansprüche

1. Faltbare Karte (1), insbesondere Radwander-, Wander- oder Autostreckenkarte, umfassend einen Kartenbogen (2), der eine Leporello-Faltung mit einer Mehrzahl aufklappbarer Kartenfelder (20, 21) aufweist, **dadurch gekennzeichnet, dass** mindestens ein Teilausschnitt (6a, 6b) eines ersten Kartenfeldes (20) auf einem zweiten Kartenfeld (21) wiederholt angeordnet ist.

2. Faltbare Karte (1) nach Anspruch 1, **dadurch gekennzeichnet, dass** der Teilausschnitt (6a, 6b) eine Umrandung aufweist.

3. Faltbare Karte (1) nach Anspruch 1 oder 2, **dadurch gekennzeichnet, dass** das erste Kartenfeld (20) und das zweite Kartenfeld (21) zueinander benachbart angeordnet sind.

4. Faltbare Karte (1) nach einem der Ansprüche 1 bis 3, **dadurch gekennzeichnet, dass** ein Teilausschnitt (6a, 6b), der mindestens abschnittsweise in einem unteren Abschnitt (5) des ersten Kartenfeldes (20) angeordnet ist, mindestens abschnittsweise in einem oberen Abschnitt (4) des zweiten Kartenfeldes 21 wiederholt angeordnet ist.

5. Faltbare Karte (1) nach einem der Ansprüche 1 bis 4, **dadurch gekennzeichnet, dass** jedes der Kartenfelder (20, 21) Nummerierungsmittel (7) umfasst.

6. Faltbare Karte (1) nach Anspruch 5, **dadurch gekennzeichnet, dass** der Teilausschnitt (6) des ersten Kartenfeldes (20) Verweisungsmittel (8) aufweist, die auf die Nummerierungsmittel (7) des zweiten Kartenfeldes (21) verweisen.

7. Faltbare Karte (1) nach einem der Ansprüche 1 bis 6, **dadurch gekennzeichnet, dass** der Kartenbogen (2) beidseitig eine wasserabweisende Beschichtung aufweist.

8. Faltbare Karte (1) nach Anspruch 7, **dadurch gekennzeichnet, dass** die wasserabweisende Beschichtung mindestens eine transparente Kunststofffolie umfasst.

9. Faltbare Karte (1) nach Anspruch 8, **dadurch gekennzeichnet, dass** die Kunststofffolie auf den Kartenbogen (2) kaschiert ist.

10. Faltbare Karte (1) nach Anspruch 8 oder 9, **dadurch gekennzeichnet, dass** die Kunststofffolie Polypropylen aufweist.

11. Faltbare Karte (1) nach einem der Ansprüche 8 bis 10, **dadurch gekennzeichnet, dass** die Kunststofffolie Polyethylen aufweist.

12. Faltbare Karte (1) nach einem der Ansprüche 8 bis 11, **dadurch gekennzeichnet, dass** die Kunststofffolie Polyester aufweist.

13. Faltbare Karte (1) nach einem der Ansprüche 8 bis 12, **dadurch gekennzeichnet, dass** die Kunststofffolie Polyethylenterephthalat (PET) aufweist.

14. Faltbare Karte (1) nach einem der Ansprüche 8 bis 13, **dadurch gekennzeichnet, dass** die Dicke der Kunststofffolie 7 bis 25 µm, vorzugsweise 10 bis 20 µm, insbesondere 12 bis 15 µm beträgt
